# EUROPÄISCHE PATENTANMELDUNG

(11) **EP 2 196 710 A1**
(43) Veröffentlichungstag der Anmeldung: **16.06.2010**
(21) Anmeldenummer: 08021609.6
(22) Anmeldetag: 12.12.2008
(51) Int. Cl.: F16J 15/32, F16J 15/44, F16J 15/56

(54) **Dichtungsanordnung**

(71) Anmelder: Carl Freudenberg KG, 69469 Weinheim (DE)
(72) Erfinder: Clemens, Markus, 64385 Reichelsheim (DE); Barth, Armin, 69517 Gorxheimertal (DE); Klenk, Thomas, 69221 Dossenheim (DE)

(57) **Zusammenfassung**

Dichtungsanordnung (1), umfassend ein Gehäuse (2) in dem ein Maschinenelement (3) beweglich angeordnet ist, wobei zwischen Gehäuse (2) und Maschinenelement (3) ein Dichtelement (4) angeordnet, wobei das Dichtelement (4) zumindest eine Dichtlippe (5) und zumindest ein Führungselement (6) aufweist, die an dem Maschinenelement (3) anliegen, wobei das Führungselement (6) in das Dichtelement (4) eingebettet ist.

## Beschreibung

### Technisches Gebiet

Die Erfindung betrifft eine Dichtungsanordnung, umfassend ein Gehäuse in dem ein Maschinenelement beweglich angeordnet ist, wobei zwischen Gehäuse und Maschinenelement ein Dichtelement angeordnet, wobei das Dichtelement zumindest eine Dichtlippe und zumindest ein Führungselement aufweist, die an dem Maschinenelement anliegen.

### Stand der Technik

Derartige Dichtungsanordnungen kommen beispielsweise bei Ventilsteuerungen in der Lebensmittelindustrie zum Einsatz. Dabei ist das Maschinenelement, eine Ventilstange, meist translatorisch beweglich. Die Dichtlippe trennt den Medienraum, in dem Lebensmittel geführt werden von der Atmosphäre oder einem weiteren Medienraum. Das Führungselement liegt an dem Maschinenelement an und bewirkt deren Abstützung. Bei einer derartigen Dichtungsanordnung ist problematisch, dass die Dichtlippe mit hohem Anpressdruck an dem Maschinenelement anliegen kann und dass das Dichtelement bei translatorischen Bewegungen des Maschinenelementes aus der Nut, in der das Dichtelement gelagert ist, herausgezogen werden kann

### Darstellung der Erfindung

Der Erfindung liegt die Aufgabe zugrunde die Dichtungsanordnung weiter zu entwickeln, dass das Dichtelement sicher in seinem Einbauraum gehalten ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist das Führungselement in das Dichtelement eingebettet. Bei dieser Anordnung ergibt sich eine Wirkverbindung zwischen Maschinenelement, Führungselement und Dichtelement in der Art, dass das Dichtelement in radialer Richtung nach außen in den Einbauraum gepresst wird. Gleichzeitig wird das Führungselement radial an das Maschinenelement angepresst. Da das Führungselement aus einem reibungsarmen Material, beispielsweise PTFE besteht, ergeben sich dennoch nur geringe Reibungskräfte und entsprechend auch nur eine geringe Axialkraft, die auf das Führungselement einwirkt. Bei der Dichtlippe ist diese Axialkraft aufgrund der materialbedingten höheren Reibung größer, so dass das Dichtelement einer Axialkraft unterworfen wird, durch die das Dichtelement aus dem Gehäuse herausgezogen werde könnte. Aufgrund der radialen Anpressung des Führungselementes und der speziellen Formgebung, wird das Dichtelement jedoch daran gehindert, aus dem Einbauraum heraus zu rutschen. Das Führungselement ist schwimmend in dem Dichtelement angeordnet. Das Führungselement liegt demnach ausschließlich an dem Dichtelement an und berührt keine der Begrenzungswände des Einbauraumes. Bei einer Schiefstellung des Maschinenelementes kann das elastisch schwimmend in dem Dichtelement gelagerte Führungselement dem Winkelversatz des Maschinenelementes in Grenzen folgen. Dadurch verringert sich die Kantenpressung an den Kanten des Führungselementes und das Führungselement ist geringerem Verschleiß unterworfen. Zusätzlich verringert sich die Gesamtreibkraft, was zu einer Verringerung der Antriebsleistung des Maschinenelementes, beispielsweise des Ventils, führt.

Das Dichtelement kann innenseitig wenigstens eine zumindest abschnittsweise umlaufende Ausnehmung aufweisen, in der das Führungselement angeordnet ist. In diese Ausnehmung ist das Führungselement eingebettet, wobei die Tiefe der Ausnehmung so auf das Führungselement abgestimmt ist, dass es die Dichtlippe nach innen nicht überragt. So ist gewährleistet, dass das Dichtelement stets mit Vorspannung dichtend an dem Maschinenelement anliegt.

Es können mehrere Führungselemente vorgesehen sein, die segmentartig über den Umfang verteilt in das Dichtelement eingelassen sind. Ein segmentiertes Führungselement ist einfacher montierbar. Des Weiteren kann es vorteilhaft, insbesondere kostengünstig sein, das Führungselement nur an den Stellen vorzusehen, die durch das Maschinenelement besonderen Belastungen unterworfen ist.

Das Gehäuse kann eine umlaufende Nut aufweisen in der das Dichtelement angeordnet ist. Die Nut bildet den Einbauraum, in den das Dichtelement mit eingebettetem Führungselement eingelegt und fixiert ist.

In der Nut kann ein Hinterschnitt angeordnet sein und das Dichtelement kann einen Vorsprung aufweisen, der in den Hinterschnitt einrastet. Die Kombination aus Hinterschnitt und Vorsprung bildet eine weitere Sicherung, durch die das Dichtelement in der Nut gehalten ist. Nach dem Einlegen der Führungselemente in das Dichtelement und dem Montieren des Maschinenelementes in die Dichtungsanordnung, presst sich das Führungselement in die Ausnehmung des Dichtelementes ein, das Dichtelement legt sich in die Nut ein und der Vorsprung verkrallt sich in dem Hinterschnitt, so dass das Dichtelement sicher in der Nut fixiert wird.

Die Nutwand und der Nutgrund der Nut können einstückig ausgeführt sein. Diese Ausführung verursacht zwar einen höheren Montageaufwand für das Dichtelement, jedoch werden bei dieser Ausführung Trennebenen vermieden, in denen sich Toträume bilden können. Derartige Toträume sind bei Lebensmittelanwendungen unerwünscht.

Das Führungselement kann mehrere über den Umfang verteilt angeordnete Stege aufweisen. Bei dieser Ausführung stützt sich das Führungselement über eine Elastomerspur des Dichtelementes stellenweise an dem Gehäuse ab. In den Bereichen der Stege ist das Dichtelement verjüngt, so dass der Steg in Richtung des Einbauraumes von einer dünnen Elastomerspur abgedeckt ist. In diesen Bereichen ist das Führungselement nach wie vor schwimmend gelagert, jedoch weist das Dichtelement in diesem Bereich eine erhöhte Steifigkeit auf. Hierbei ist vorteilhaft, dass das Führungselement weiterhin flexibel in dem Dichtelement gelagert ist und beispielsweise einem Winkelversatz des Maschinenelementes folgen kann. Die Stege und die Elastomerspur können auch so ausgeführt sein, dass sie das Gehäuse fast berühren, wenn besonders hohe radiale Kräfte auf das Führungselement einwirken.

Das Dichtelement kann zwei Dichtlippen aufweisen. In einer vorteilhaften Ausgestaltung kann jeder Stirnseite des Führungselementes eine Dichtlippe zugeordnet sein. Zum einen bleibt die Dichtwirkung auch erhalten, wenn eine Dichtlippe beschädigt ist und zum anderen können die Dichtlippen so abgestimmt sein, dass sie für bestimmte Medien ausgewählt sind. So kann eine Dichtlippe auf das Abdichten ölhaltiger Medien und die andere Dichtlippe auf das Abdichten wässriger Medien abgestimmt sein.

Das Führungselement kann sich zumindest abschnittsweise axial in Richtung der Dichtlippe erstrecken. Bei dieser Ausführung überdeckt das Führungselement abschnittsweise das Dichtelement und reduziert die Anpressung der Dichtlippe an das abzudichtende Maschinenelement. Dadurch reduziert sich die Reibung und der Verschleiß der Dichtlippe.

### Kurzbeschreibung der Zeichnung

Einige Ausführungsbeispiele der erfindungsgemäßen Dichtungsanordnung werden nachfolgend anhand der Figuren näher erläutert. Diese zeigen, jeweils schematisch:
- Fig. 1: eine Dichtungsanordnung mit einem segmentierten Führungselement;
- Fig. 2: die Dichtungsanordnung nach Figur 1 im Schnitt;
- Fig. 3: die Dichtungsanordnung nach Figur 1 im Schnitt einer zusätzlichen Dichtlippe;
- Fig. 4: eine Dichtungsanordnung mit einem Führungselement mit Stegen;
- Fig. 5: eine Dichtungsanordnung mit einem umlaufenden Führungselement.

### Ausführung der Erfindung

Die Figuren zeigen eine Dichtungsanordnung 1, bestehend aus einem Dichtelement 4, welches in einer Nut 8 eines Gehäuses 2 angeordnet ist. Nutwand 11 und Nutgrund 12 der Nut 8 sind einstückig und materialeinheitlich ausgeführt. In dem Gehäuse 2 ist ein Maschinenelement 3 beweglich angeordnet. Die Dichtungsanordnung 1 ist insbesondere als Ventildichtung für Lebensmittelanwendungen geeignet. Bei diesen Anwendungen ist das Maschinenelement 3 eine vorwiegend translatorisch bewegte Stange, durch die ein Ventilteller oder ein Ventilkegel bewegt wird. Die Stange ist in dem Gehäuse 2 geführt und das Dichtelement 4 trennt einen ersten Raum, in dem Lebensmittel gefördert werden, von einem weiteren Raum, in dem der Stellantrieb für die Stange angeordnet ist, ab. Das Dichtelement 4 weist zumindest eine Dichtlippe 5 und ein Führungselement 6 ist in das Dichtelement schwimmend eingebettet. Die Dichtlippe 5 und das Führungselement 6 liegen an dem Maschinenelement 3 an. In der Nut 8 ist ein Hinterschnitt 9 angeordnet, der aus einer Vertiefung in einer Nutwand 11 besteht. In den Hinterschnitt 9 greift ein Vorsprung 10 des Dichtelementes 4 ein. Das Führungselement 6 ist aus PTFE gebildet und das Dichtelement besteht aus einem lebensmitteltauglichen Dichtungswerkstoff.

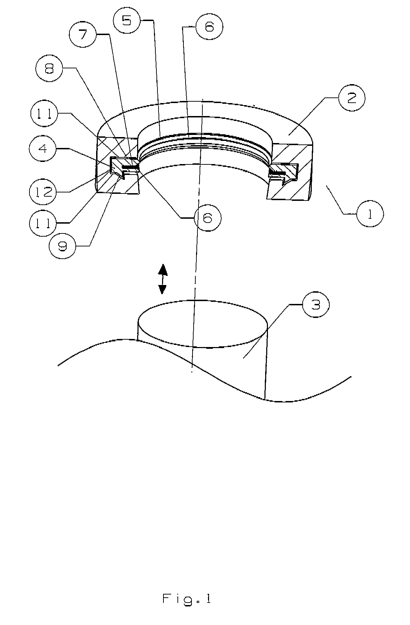

Figur 1 zeigt eine Dichtungsanordnung bei der das Führungselement 6 segmentiert ist, also aus mehreren Teilen besteht, die gleichmäßig über den Umfang verteilt in das Dichtelement 4 eingelegt sind. In dieser Ausgestaltung sind die Führungselemente 6 schwimmend in dem Dichtelement 4 angeordnet, es besteht kein Kontakt zur Nutwand. Dazu weist das Dichtelement 4 innenseitig mehrere abschnittsweise umlaufende Ausnehmungen 7 auf, in denen das Führungselement 6 angeordnet ist.

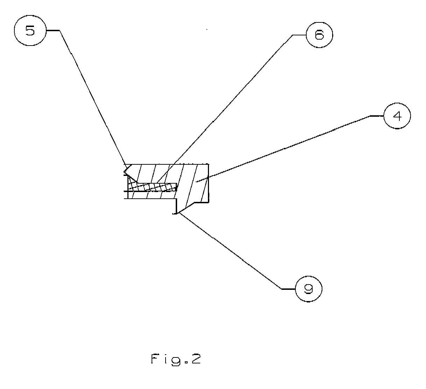

Figur 2 zeigt das in Figur 1 gezeigte Dichtelement 4 im Schnitt.

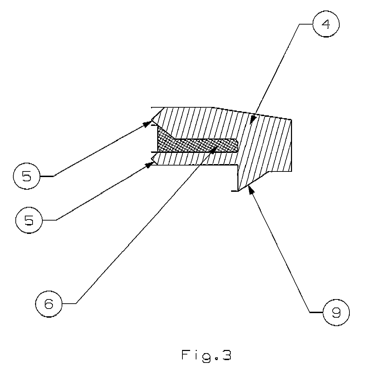

Figur 3 zeigt das in Figur 1 gezeigte Dichtelement 4 im Schnitt. In diesem Ausführungsbeispiel weist das Dichtelement 4 jedoch zwei Dichtlippen 5 auf, wobei jeder Stirnseite des Führungselementes 6 eine Dichtlippe 5 zugeordnet ist. Das Führungselement 6 erstreckt sich abschnittsweise axial in Richtung der Dichtlippe 5 und überdeckt in diesem Bereich die Dichtlippe 5, so dass sich die Dichtlippe 5 in diesen Bereich an dem Führungselement 6 abstützt, wodurch die Reibung und die Belastung der Dichtlippe 5 reduziert ist.

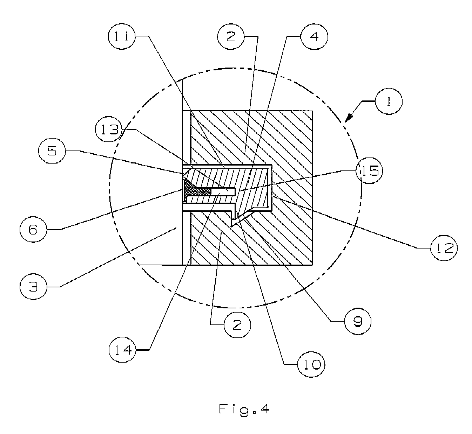

Figur 4 zeigt eine Dichtungsanordnung 1 bei der das Dichtelement 4 mehrere Vertiefungen 14 aufweist, in die sich Stege 13, die aus dem Führungselement 6 ausgebildet sind, erstrecken. Im Bereich der Vertiefungen 14 ist das Material des Dichtelementes 4 verdünnt, so dass der Steg 13 des Führungselementes 6 nur noch von einer dünnen Elastomerspur 15 bedeckt ist.

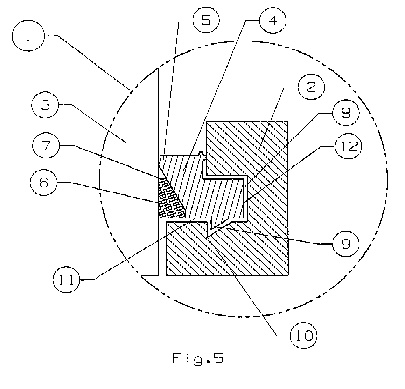

Figur 5 zeigt eine Dichtungsanordnung 1 mit einem umlaufenden Führungselement 6, welches in einer umlaufenden Ausnehmung 7 des Dichtelementes 4 schwimmend gelagert ist.

## Patentansprüche

1. Dichtungsanordnung (1), umfassend ein Gehäuse (2) in dem ein Maschinenelement (3) beweglich angeordnet ist, wobei zwischen Gehäuse (2) und Maschinenelement (3) ein Dichtelement (4) angeordnet, wobei das Dichtelement (4) zumindest eine Dichtlippe (5) und zumindest ein Führungselement (6) aufweist, die an dem Maschinenelement (3) anliegen, **dadurch gekennzeichnet, dass** das Führungselement (6) schwimmend in das Dichtelement (4) eingebettet ist.

2. Dichtungsanordnung nach Anspruch 1, **dadurch gekennzeichnet, dass** das Dichtelement (4) innenseitig wenigstens eine zumindest abschnittsweise umlaufende Ausnehmung (7) aufweist, in der das Führungselement (6) angeordnet ist.

3. Dichtungsanordnung nach Anspruch 1 oder 2, **dadurch gekennzeichnet, dass** mehrere Führungselemente (6) vorgesehen sind, die segmentartig über den Umfang verteilt in das Dichtelement (4) eingelassen sind.

4. Dichtungsanordnung nach einem der Ansprüche 1 bis 3, **dadurch gekennzeichnet, dass** das Gehäuse (2) eine umlaufende Nut (8) aufweist in der das Dichtelement (4) angeordnet ist.

5. Dichtungsanordnung nach Anspruch 4, **dadurch gekennzeichnet, dass** in der Nut (8) ein Hinterschnitt (9) angeordnet ist und dass das Dichtelement (4) einen Vorsprung (10) aufweist der in den Hinterschnitt (9) einrastet.

6. Dichtungsanordnung nach Anspruch 4 oder 5, **dadurch gekennzeichnet, dass** die Nutwand (11) und der Nutgrund (12) der Nut (8) einstückig ausgeführt sind.

7. Dichtungsanordnung nach einem der Ansprüche 1 bis 6, **dadurch gekennzeichnet, dass** das Führungselement (6) mehrere über den Umfang verteilt angeordnete Stege (13) aufweist.

8. Dichtungsanordnung nach einem der Ansprüche 1 bis 7, **dadurch gekennzeichnet, dass** das Dichtelement (4) zwei Dichtlippen (5) aufweist.

9. Dichtungsanordnung nach Anspruch 8, **dadurch gekennzeichnet, dass** jeder Stirnseite des Führungselementes (6) eine Dichtlippe (5) zugeordnet ist.

10. Dichtungsanordnung nach einem der Ansprüche 1 bis 9, **dadurch gekennzeichnet, dass** sich das Führungselement (6) zumindest abschnittsweise axial in Richtung der Dichtlippe (5) erstreckt.
